# EUROPEAN PATENT APPLICATION

(11) **EP 4 385 836 A1**
(43) Date of publication of application: **19.06.2024**
(21) Application number: 22213558.4
(22) Date of filing: 14.12.2022
(51) Int. Cl.: B60S 1/24, B60S 1/34

(54) **LINKAGE FOR A WINDSCREEN WIPER DEVICE AND SAID WINDSCREEN WIPER DEVICE**

(71) Applicant: Valeo Systèmes d'Essuyage, 78322 Le Mesnil Saint Denis (FR)
(72) Inventor: SPIECHA, Antoni, 78322 LE MESNIL SAINT DENIS (FR); TOPOLSKI, Daniel, 78322 LE MESNIL SAINT DENIS (FR)
(74) Representative: Valeo Visibility

(57) **Abstract**

Invention concerns a linkage mechanism (1) for a windscreen wiper device, the linkage mechanism being of the type of a four-bar mechanism comprising a drive lever (12) adapted to be driven in motion by a drive mechanism, and a control lever (11) adapted to be movably supported on a body of a motor vehicle, the drive lever and/or the control lever being connected via joints to a coupling lever (13) intended to guide a wiper arm and/or a wiper blade. In order to make it possible to adjust the length of the linkage mechanism (1) and the amplitude of the sweeping movement of the wiper blade on the windscreen (3), at least one of the drive lever (12), the control lever (11) and the coupling lever (13) comprises a length adjustment device (15) configured to be collapsed or extended.

## Description

The technical background of the present invention is that of rotating mechanisms and linkage devices for windscreen. More particularly, the invention relates to a linkage for a windscreen wiper device and said windscreen wiper device.

In the state of the art, numerous windscreen wiper devices with a four-bar linkage are known. In such linkages, a wiper arm is held on two coupling points by two cranks and driven, thereby executing a stroke/rotating movement. These windscreen wiper devices feature a wiper arm, which is composed of an articulated part to which a wiper blade is linked. The articulated part is connected to a fastening part, which is fastened to the usual windscreen wiper device by means of two cranks. In this arrangement, one of the two cranks is driven causally in a pendulum or rotating fashion by a drive unit, thereby producing a rotating movement along a circular arc section for the wiper arm. In order to generate a stroke of the wiper arm, the second crank is fastened on the wiper device or on the motor vehicle body so that it can rotate, and is not driven, which is the reason why it is frequently designated as a guide crank since it takes the fastening part only one degree of freedom into the movement. The strokes in this process are very limited, which is disadvantageous in the case of large windows since the wiper arm can advance into the passenger-side corner of the windscreen in only a very limited way.

One technical drawback of such windscreen wiper devices is that said wiper devices do not easily allow peripheral areas of the windscreen to be reached. In particular, the areas of the windscreen located close to the upper corners are not accessible, due to the shape of the windscreen on the one hand, and the rotational movement of the wiper blade on the other.

More generally, such known wiper devices require precise assembly in order to guarantee that the sweeping amplitude of the wiper blade on the windscreen meets the regulatory requirements and that said sweeping amplitude covers the entire field of view of the motor vehicle's driver. Of course, the sweeping amplitude of the wiper blade depends on the model of windscreen and wiper blade, and more generally on the model of motor vehicle concerned. This situation leads to either designing many variants of the wiper blade in order to provide a dedicated variant for each model, or designing a single type of wiper blade adaptable to all models. In the latter case, the performance of the wiper blade will be reduced and probably insufficient depending on the model and the motor vehicle, which is not desired.

In order to solve the aforementioned technical problem, one knows in particular the document DE102019220250 which describes a wiper device that comprises a length adjusting device of a control lever of the four-bar mechanism. More precisely, the control lever of DE102019220250 is formed in two parts translatable to each other, from a guide element and a sliding element. The sliding element is configured to be inserted into the guide element, in order to make it possible to adjust the length of the control lever when assembling the linkage, which in turn creates a particularly good adaptability to a specific motor vehicle model.

A technical drawback of DE102019220250 is that the four-bar mechanism is more complex to produce and needs a supplementary step during its assembly. Moreover, the four-bar has a lack of fragility, due to the sliding element in the guide element, leading to more frequent maintenance operations and increasing costs.

It is an object of the present invention to provide a new linkage mechanism for a windscreen wiper device in order to remediate or resolve at least some of the problems described above, and to lead to further other advantages.

Another object of the invention is to make it possible to adjust the length of the linkage mechanism to make it possible to adjust the wiper device amplitude.

Another object of the invention is to provide such linkage mechanism that is strong enough and to improve its reliability.

According to a first aspect of the invention, at least one of the aforementioned objectives is achieved with a linkage mechanism for a windscreen wiper device for a motor vehicle, the linkage mechanism comprising:
- a drive lever adapted to be driven in motion by a drive mechanism, and
- a control lever adapted to be movably supported on a body of the motor vehicle, the drive lever and/or the control lever being connected via joints to a coupling lever intended to guide a wiper arm and/or a wiper blade.

In the linkage mechanism according to the first aspect of the invention, at least one of the drive lever, the control lever and the coupling lever - said length adapted lever - comprises a length adjustment device configured to be collapsed or extended in order to respectively decrease or extend a length of said at least one of the drive lever, the control lever and the coupling lever.

In the context of the present invention, the drive lever is the first lever that is mechanically coupled to a main lever of the windscreen wiper device. The main lever is a lever that is connected to the main actuator of the windscreen wiper device, in order to induce at least a rotational movement on the windscreen with which the mechanical linkage is suitable to work. The drive lever is mechanically coupled to the main lever through a rotatable connexion. The drive lever has a longitudinal shape.

In the context of the present invention, the coupling lever is oppositely disposed from the drive lever and regarding the control lever. The drive lever is located at one end of the control lever, attached to said control lever through a rotatable connexion, while the coupling lever is located at one another end of the control lever, opposite to the previous one, and attached to said control lever through a rotatable connexion. The coupling lever is mechanically coupled to the main lever through a rotatable connexion. The coupling lever has a longitudinal shape.

In the context of the present invention, the control lever is configured to establish a connexion between the drive lever and the coupling lever on a first hand, and also to make it possible to be connected to a wiper arm and a wiper blade on a second hand. As described therebefore, the control lever is rotatably connected to both the drive lever and the coupling lever. The control lever has a longitudinal shape.

In the context of the present invention, the linkage mechanism is a mechanism that make it possible to attach a wiper blade to a wiper arm that is mechanically coupled to said linkage mechanism. The linkage mechanism is thus able to transmit the movement induced by an actuator of the windscreen wiper device to the wiper blade. In a very general way, the linkage mechanism according to the first aspect of the invention is a kind of four-bar mechanism that make it possible to provide a combination of rotational movement and translation movement of the wiper blade that is dedicated to being attached to a coupling termination of the control lever. In other words, the mechanical linkage is a kind of deformable parallelogram, whose side are defined through respectively the control lever, the coupling lever, the drive lever and the main lever.

In the context of the present invention, the length adjustment device is configured to be expanded or collapsed, as a preliminary setup of the linkage mechanism according to the first aspect of the invention, in order to adjust the length of the linkage mechanism and, furtherly, to adjust the amplitude of sweeping movement of the wiper blades on the windscreen. The length adjustment device is set up to be used once and for all by an operator being installing and configuring the linkage mechanism and the windscreen wiper device.

Once the length adjustment device has been configured, the configuration thus defined is almost permanent, unless said length adjustment device is reconfigured again. Thus, it is not necessary to lock the length adjustment device in the configuration obtained. The length adjustment device remains by itself and spontaneously in the configuration in which it has been set up, without being necessary to use a locking member for example.

The linkage mechanism with respect to the first aspect of the invention advantageously includes at least one of the embodiments below, the technical characteristics included in these embodiments being considered independently or in combination:
- the length adjustment device is made in one piece with the length adapted lever. In other terms, the length adjustment device is made in one piece with said at least one of the drive lever, the control lever and the coupling lever. In other words, the length adjustment device is directly designed onto at least one of the drive lever, the control lever and the coupling lever whose length can be adjusted by applying an effort to the length adjustment device. This configuration makes it possible to easily adjust the length of the adjusted length lever in order to easily adjust the linkage mechanism according to the first aspect of the invention;
- the length adjustment device itself is made in one piece. Thus, the length adjustment device does not include a sliding element that is able to translate into a guide element. The length adjustment device is configured to be deformed in order to provide such extension or such contraction;
- in a more general way, the length adjustment device is able to be extended or to collapsed tanks to elastically deformation of the length adapted lever. Alternatively, the length adjustment device is able to be extended or to collapsed tanks to plastically deformation of the length adapted lever. Those embodiments make it possible to define the correct length of the length adjustment device, by deforming said length adjustment device. When said deformation is elastically obtained, then it's further possible to readjust and reconfigure said length adjustment device in another configuration. Conversely, when said deformation is plastically obtained, then it's not further possible to reconfigure said length adjustment device in another configuration, and the plastically obtained deformation is permanent;
- the length of the length adapted lever is adjusted through an adaptation of the width of the length adjustment device. Thus, when the length adapted lever is configured through a wider configuration, then the length of said length adapted lever and the length adapted lever is shorter than the length of said length adapted lever and said length adapted lever when the length adapted lever is configured through a narrower configuration;
- the length adjustment device comprises a first length adjustment device associated with the drive lever, and a second length adjustment device associated with the coupling lever. This configuration gives more options and more possibilities to adjust and configure both the linkage mechanism and the wiper device to which said linkage mechanism is adapted to be attached with. A termination of each length adjustment device is attached to the control lever, through a connection that make it possible for both first adjustment device and second adjustment device to rotate regarding the control lever. Preferably, the adjustment devices are connected to the control lever through a pivot link or a ball joint;
- the length adjustment device and the length adapted lever are made from the same material, preferably including steel. In a more general way, the length adjustment device and the length adapted lever are made from a material with a high Young Modulus, such as ultra-high-strength steels for example;
- the length adjustment device is configured to increase or decrease the length of the length adapted lever in a range larger than +/- 0,1 mm from its nominal length, said nominal length being defined as the magnification of the length adapted lever's length thanks to the length adjustment device is null;
- according to a first mode of realization of the linkage mechanism, the length adjustment device is configured to be expanded by applying an external force onto said length adjustment device, along a direction that is perpendicular, or at least secant to the elongation direction of the adjusted length lever, following the application of said external force. In other terms, the length adapted lever is configured to be expanded following applying the external force to the length adjustment device in a direction that is secantly oriented with respect to said length adapted lever. By applying a positive force on the length adjustment device, i.e. a force that is oriented in direction of said length adjustment device, the length adapted lever is then extended; and by applying a negative force on the length adjustment device, i.e. a force that is oriented in the opposite direction of said length adjustment device, the length adapted lever is then reduced;
- according to the first mode of realization of the linkage mechanism, the length adjustment device comprises a central opening laterally delimited by two lateral borders, each lateral border extending from the length adapted lever and being located at each side of the central opening. In this first mode of realization, the length of the length adjustment device is defined by adjusting the width and/or the length of the central opening. Such a setting can be obtained by deforming - elastically or plastically - one or two of the lateral borders that delimit the central opening;
- the central opening has a diamond shape, or an elliptic shape, or a circular shape, or a polygonal shape. In a more general way, the central opening is defined by non rectilinear borders, or border of said central opening comprise more than on rectilinear segments that are non parallels and non collinear;
- each lateral border comprises a first segment and a second segment angularly oriented with respect to the first segment. Advantageously, both first segment and second segment are rectilinear;
- an angle between the second segment and the first segment is included between 90° and 150°;
- dimensions and shape of each lateral borders are identical;
- the first lateral border is symmetrical with the second lateral border, regarding a central axis of symmetry being aligned with the length adapted lever;
- according to a second mode of realization of the linkage mechanism, the length adjustment device comprises at least one folded segment made from the length extended lever, the at least one folded segment being foldable or unfolded in order to respectively decrease or extend said length adapted lever. In that second mode of realisation, the length adjustment device comprises one or many folded segments, each segment being unfolded to extend the length of the length adjustment device.
- according the second mode of realization of the invention, the length adjustment device is here configured to be longitudinally extended or collapsed in order to respectively extend or reduce the length of the length adapted lever;
- the length adjustment device has a U-shape or an OMEGA-shape. In other terms, each folded segments are folded on themselves or on another adjacent segment;
- in anyone of the above-mentioned modes of realization, the length adjustment device has to be configured with a tool in order to extend or to collapse said length adjustment device in anyone of its configuration. Such tool can be a clamp or a dedicated key.

According to a second aspect, the invention aims at proposing a windscreen wiper device for a motor vehicle, the wiper device comprising a wiper arm able to support at least one wiper blade, said wiper arm being coupled to a rotating shaft thanks to a coupling mechanism, said coupling mechanism comprising the linkage mechanism according to the first aspect of the invention or to anyone of its embodiments, a first end of the drive lever being coupled to the rotative shaft of a drive mechanism.

Various embodiments of the invention are provided hereafter, said embodiments being considered according to anyone of their possible combinations, explicitly described or implicitly disclosed.

Other characteristics and advantages of the invention will become highlighted through the description that follows on the one hand, and through several embodiments given as some not limiting examples related to drawings on the other hand, on which :
[Fig.1] illustrates a perspective view of an example of realization of the linkage mechanism according to the first aspect of the invention;
[Fig.2] illustrates a schematic top view of the length adjustment device embedded on the linkage mechanism illustrated on FIGURE 1;
[Fig.3] illustrates a perspective overview of a windscreen wiper device according to the second aspect of the invention and comprising the linkage mechanism illustrated in FIGURE 1.

Of course, the characteristics, the alternatives and the different embodiments of the invention can be associated with each other, according to various combinations, insofar as they are not incompatible or exclusive of each other. In particular, alternatives of the invention may comprise only a selection of characteristics described below, if such selected characteristics is enough to provide a technical advantage or to differentiate the invention from to the state of the prior art.

In particular, the alternatives and the embodiments described can be combined with each other if nothing prevents this combination from a technical point of view.

In the figures and the description, elements that are visible on several figures retain the same reference.

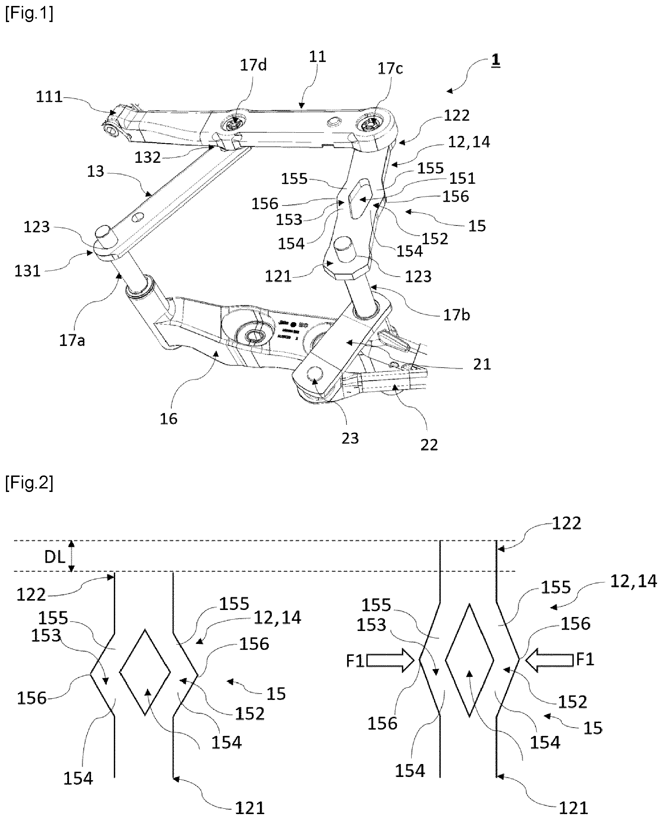

FIGURE 1 illustrates a linkage mechanism 1 for a windscreen wiper device 2 for a motor vehicle, the linkage mechanism 1 comprising:
- a drive lever 12 adapted to be driven in motion by a drive mechanism, and
- a control lever 11 adapted to be movably supported on a body of the motor vehicle, the drive lever 12 and/or the control lever 11 being connected via joints to a coupling lever 13 intended to guide a wiper arm 24 and/or a wiper blade 25.

In the linkage mechanism 1 according to the first aspect of the invention, at least one of the drive lever 12, the control lever 11 and the coupling lever 13 - said length adapted lever 14 - comprises a length adjustment device 15 configured to be collapsed or extended in order to respectively decrease or extend a length of said at least one of the drive lever 12, the control lever 11 and the coupling lever 13.

The linkage mechanism 1 is a kind of four-bar mechanism that make it possible to provide a combination of rotational movement and translation movement of the wiper blade 25 that is dedicated to being attached to a coupling termination 111 of the control lever 11. The four-bar mechanism is achieved with :
- a main lever 16 and the control lever 11 that are quite parallel in FIGURE 1. It's to be noticed that, depending on the configuration of the linkage mechanism 1 and the windscreen wiper device 2, the main lever 16 and the control lever 11 could be set up in a non-parallel configuration;
- the drive lever 12 and the coupling lever 13, oppositely disposed at one end and one another end of the coupling lever 13, said drive lever 12 and said coupling lever 13 being both attached to the main lever 16. In the configuration of the linkage mechanism 1 illustrated in FIGURE 1, the drive lever 12 and the coupling lever 13 are non-parallel, but it could be the case, depending on the configuration of the linkage mechanism 1 and the windscreen wiper device 2.

The drive lever 12, the coupling lever 13, the control lever 11 and the main lever 16 have a longitudinal shape, as they're shaped in a globally rectilinear shape. In order to provide the expected curved movement of the wiper blade 25 on the windscreen 3, the coupling lever 13 is longer than the drive lever 12.

In order to provide strength, at least one of the drive lever 12, the coupling lever 13, the control lever 11 and the main lever 16, and preferably all of them, are made of a material comprising metal in order to provide a very high Young Modulus. As a preferred embodiment, at least one of the drive lever 12, the coupling lever 13, the control lever 11 and the main lever 16, and preferably all of them, are made of steel or comprise a steel alloy.

Each lever of the linkage mechanism 1 is attached to one other through a rotatable connexion that allow a rotation movement between two adjacent levers. More precisely:
- the drive lever 12 is attached at its first end 121, to a coupling flange 21 and to the main lever 16 thanks to a second rotating axe 17b;
- the drive lever 12 is attached at its second end 122, to the control lever 11 thanks to a third rotating axe 17c. The third rotating axe 17c is oppositely disposed from a coupling termination 111 of the control lever 11, said coupling termination 111 being dedicated to being fastened to a wiper arm 24 nonvisible in FIGURE 1 but visible in FIGURE 2;
- the coupling lever 13 is attached, at its first termination 131, to the main lever 16, and more precisely at an extremity of the main lever 16, thanks to a first rotating axe 17a. In particular, the first rotating axe 17a is located at distance to the second rotating axe 17b, regarding the longitudinal extension of the main lever 16;
- the coupling lever 13 is attached, at its second termination 132, to the control lever 11 thanks to a fourth rotating axe 17d. The fourth rotating axe 17d is oppositely disposed from the third rotating axe 17c, regarding the longitudinal extension of the control lever 11. As visible in FIGURE 1, the fourth rotating axe 17d is located near the coupling termination 111 of the control lever 11.

Thus, the linkage mechanism 1 is of the type of a four-bar mechanism that make it possible to attach a wiper blade 25 to a wiper arm 24 that is mechanically coupled to said linkage mechanism 1, thanks to its coupling termination 111. The linkage mechanism 1 is thus able to transmit the movement induced by an actuator 27 of the windscreen wiper device 2 to the wiper blade 25, as visible in FIGURE 2.

With respect to the first aspect of the invention, the linkage mechanism 1 includes the length adjustment device 15. The length adjustment device 15 is configured to be expanded or collapsed, as a preliminary setup of the linkage mechanism 1, to preload the length of the linkage mechanism 1 and, furtherly, to adjust the amplitude of sweeping movement of the wiper blade 25s on the windscreen 3.

In the example illustrated in FIGURE 1, the length adjustment device 15 is attached with the drive lever 12. Of course, one could obtain some very similar results with attaching the length adjustment device 15 with the coupling lever 13 or with the control lever 11. Moreover, the scope of the present invention also includes a combination of anyone of the preceding attachments of the length adjustment device 15. In other words, the linkage mechanism 1 may comprise :
- a first length adjustment device 15 attached with a first lever chosen between the coupling lever 13, the control lever 11 and the drive lever 12, and
- a second length adjustment device 15 being attached with anyone of the levers but the one to which the first length adjustment device 15 is attached. In other words, the second length adjustment device 15 is attached to a different lever than the one to which the first adjustment device is attached to.

In another particular combination, the linkage mechanism 1 according to the first aspect of the invention may include three length adjustment device 15s, each length adjustment device 15s being attached with one single lever chosen between the control lever 11, the coupling lever 13 and the drive lever 12.

The length adjustment device 15 or the length adjustment device 15s are preferably made in one single piece with the length adapted lever 14 on which said length adjustment device 15(s) is/are attached. The length adjustment device 15 is designed directly onto the length adapted lever 14 14 that is chosen between at least one of the drive lever 12, the control lever 11 and the coupling lever 13.

The length of the length adapted lever 1414 can be further adjusted by applying an external force F1 to the length adjustment device 15, as visible in FIGURE 2.

The length adjustment device 15 is configured to be deformed in order to provide such extension or such contraction;

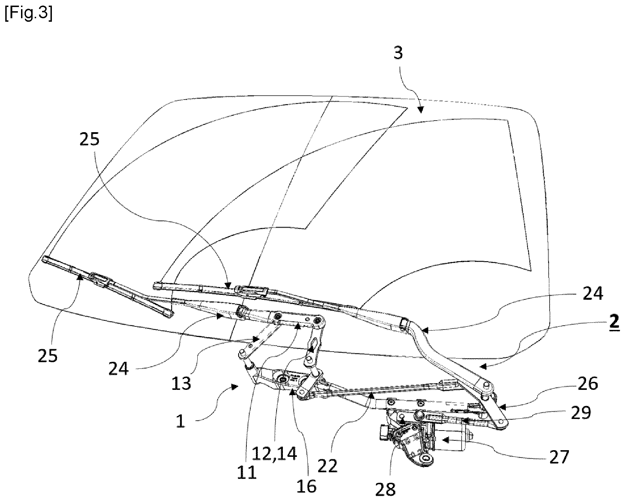

As visible in FIGURE 3, the linkage mechanism 1 is able to be included in a windscreen wiper device 2. The windscreen wiper device 2 is suitable for cleaning a windscreen 3 of a motor vehicle, by displacing through a combination of rotation and translation.

The windscreen wiper device 2 comprises a wiper arm 24 able to support at least one wiper blade 25, said wiper arm 24 being coupled to a rotating shaft 28 thanks to a coupling mechanism. The coupling mechanism comprises the linkage mechanism 1 as described therebefore, the first end 121 of the drive lever 12 being coupled to the rotative shaft 28 of a drive mechanism.

As visible in FIGURE 1, the coupling mechanism comprises a coupling flange 21 that extends from a termination of the connecting rod 22 to the first end 121 of the drive lever 12, through the second rotating axe 17b. Thus, the second rotation axis make it possible to connect the connecting rod 22 to the drive lever 12 in order to transmit the effort and the movement generated by an actuator 27 of the drive mechanism, through the connecting rod 22, to the drive lever 12. The coupling flange 21 has a shape of an elongating plate. The coupling shape is mainly composed with metal, preferably with steel.

The drive mechanism is configured to generate the movement of the wiper blade 25 on the windscreen 3, in order to remove dirt from the surface of the windscreen 3, and/or to clean said windscreen 3.

The drive mechanism comprises :
- an actuator 27 configured to generate and control a rotational movement of a shaft 28. The actuator 27 can be of any type in the context of the present invention, as for example a step motor;
- a main rod 29 that is directly coupled with the shaft 28, at a first extremity, and with the actuating rod 26 at a second extremity. The main rod 29 makes it possible to fasten both the actuating rod 26 and the connecting rod 22 to said main rod 29. The main rod 29 is configured to transmit the rotational movement applied to the shaft 28 by the actuator 27 to both the actuating rod 26 and the connecting rod 22;
- the actuating rod 26 is located in an intermediate position between the wiper arm 24 and the actuator 27. The actuating rod 26 makes it possible to fasten the wiper arm 24. The main rod 29 is configured to transmit the rotational movement applied to the shaft 28 by the actuator 27 to the wiper arm 24.

As illustrated in FIGURE 3, the linkage mechanism 1, as embedded on the windscreen wiper device 2, provides an optimized scanning surface on the windscreen 3. Thus, the setting up of the linkage mechanism 1 as described hereabove makes it possible to adjust the length of the length adjustment device 15 in order to adjust the length of the linkage mechanism 1 itself and, finally, to adapt the sweeping amplitude of the wiper arm 24 attached to said linkage mechanism 1.

In reference to FIGURE 2, the length adjustment device 15 will be now described in detail.

In the following paragraphs, the length adapter lever is the lever, chosen between the drive lever 12, the control lever 11 and the coupling lever 13 on which the length adapter device is attached. As described hereabove, the linkage mechanism 1 may comprise one, two or three length adjustment device 15s respectively attached to one, two or three levers chosen between the drive lever 12, the control lever 11 and the coupling lever 13, each of said the drive lever 12, the control lever 11 and the coupling lever 13 comprising one single length adjustment device 15.

In the example of realization illustrated in the FIGURES, the length adapted lever 14 is the drive lever 12, the linkage mechanism 1 comprising one single length adjustment device 15.

The length adjustment device 15 itself is made in one single piece. Thus, the length adjustment device 15 does not include a sliding element that is able to translate into a guide element, as present in some previous arts.

More typically, as visible in FIGURE 2, the length adjustment device 15 is made in one piece with the length adapted lever 14. The length adjustment device 15 and the length adapted lever 14 are made from the same material with a high Young Modulus, such as ultra-high-strength steels for example.

The length adjustment device 15 is configured to be deformed in order to provide such extension or such contraction. In particular, the length adjustment device 15 is able to be extended or to collapsed tanks to elastically an/or plastically deformation of the length adapted lever 14. For this purpose, the length of the length adapted lever 14 is adjusted through an adaptation of the width of the length adjustment device 15: by applying an external force F1 to lateral edges of the length adjustment device 15, it is possible to extend or collapse said length adjustment device 15.

FIGURE 2 schematically illustrates two different configurations of the length adjustment device 15. On the left side, the length adjustment device 15 is configured in a first configuration, while the length adjustment device 15 illustrated on the right side is configured in a second configuration. In that second configuration, the length adjustment device 15 has been deformed in order to extend the length of the length adjustment device 15 and the length adapted lever 14 14 on which it's attached. the length extension DL if indicated with dash lines on FIGURE 2.

In the example of realization described in FIGURE 2, the length adjustment device 15 is configured to be expanded by applying an external force F1 onto said length adjustment device 15, along a direction that is perpendicular, or at least secant to the elongation direction of the adjusted length lever, following the application of said external force F1:
- by applying a positive force on the length adjustment device 15, i.e. an external force F1 that is oriented in direction of said length adjustment device 15, the length adapted lever 14 14 is then extended; and
- by applying a negative force on the length adjustment device 15, i.e. an external force F1 that is oriented in the opposite direction of said length adjustment device 15, the length adapted lever 14 14 is then reduced.

As visible in FIGURE 2, the length adjustment device 15 comprises a central opening 151 laterally delimited by two lateral borders 152, 153. Each lateral borders 152, 153 extend from the length adapted lever 14 14 and are located at each side of the central opening 151.

The central opening 151 has a diamond shape, the central opening 151 being delimited by non rectilinear borders, i.e. borders comprising more than on rectilinear segments that are non parallels. In particular, each lateral border of the central opening 151 comprises a first segment 154 and a second segment 155 angularly oriented with respect to the first segment 154. Advantageously, both first segment 154 and second segment 155 are rectilinear, and an angle between the second segment 155 and the first segment 154 is preferably included between 90° and 150°.

As visible in FIGURE 2, the first lateral border 152 is symmetrical with the second lateral border 153, regarding a central axis of symmetry being aligned with the length adapted lever 14 14.

Thus, by applying an external force F1 on the length adapter device, and more precisely on an apex 156 of the first lateral border 152 and on an apex 156 of the second lateral border 153, it is possible to change the shape of said lateral borders 152, 153, inducing a change of the length adapter device and the shape of the length adapter lever. When the length adapted lever 14 is configured through a wider configuration, then the length of said length adapted lever 14 and the length adapted lever 14 is shorter than the length of said length adapted lever 14 and said length adapted lever 14 when the length adapted lever 14 is configured through a narrower configuration.

Thanks to the length adjustment device 15 as described before, it is now possible to increase or to decrease the length of the length adapted lever 14 in a range larger than +/- 0,1 mm from its nominal length, said nominal length being defined as the magnification of the length adapted lever 14's length thanks to the length adjustment device 15 is null.

In summary, the invention concerns a linkage mechanism 1 for a windscreen wiper device 2, the linkage mechanism 1 being of the type of a four-bar mechanism comprising a drive lever 12 adapted to be driven in motion by a drive mechanism, and a control lever 11 adapted to be movably supported on a body of a motor vehicle, the drive lever 12 and/or the control lever 11 being connected via joints to a coupling lever 13 intended to guide a wiper arm 24 and/or a wiper blade 25. In order to make it possible to adjust the length of the linkage mechanism 1 and the amplitude of the sweeping movement of the wiper blade 25 on the windscreen 3, at least one of the drive lever 12, the control lever 11 and the coupling lever 13 comprises a length adjustment device 15 configured to be collapsed or extended.

Of course, the invention is not limited to the examples that have been described and many adjustments can be made to these examples without departing from the scope of the invention. In particular, the different characteristics, forms, alternatives and embodiments of the invention may be combined with each other in various combinations insofar as they are not incompatible or exclusive of each other. In particular, all the alternatives and embodiments described hereabove can be combined with each other.

## Claims

1. A linkage mechanism (1) for a windscreen wiper device (2) for a motor vehicle, the linkage mechanism (1) comprising:
- a drive lever (12) adapted to be driven in motion by a drive mechanism, and
- a control lever (11) adapted to be movably supported on a body of the motor vehicle, the drive lever (12) and/or the control lever (11) being connected via joints to a coupling lever (13) intended to guide a wiper arm (24) and/or a wiper blade (25),
wherein at least one of the drive lever (12), the control lever (11) and the coupling lever (13) - said length adapted lever (14) - comprises a length adjustment device (15) configured to be collapsed or extended in order to respectively decrease or extend a length of said at least one of the drive lever (12), the control lever (11) and the coupling lever (13).

2. The linkage mechanism (1) of claim 1, wherein the length adjustment device (15) is made in one piece with the length adapted lever (14).

3. The linkage mechanism (1) of anyone of claims 1 or 2, wherein the length adjustment device (15) comprises :
- a first length adjustment device (15) associated with the drive lever (12), and
- a second length adjustment device (15) associated with the coupling lever (13).

4. The linkage mechanism (1) of anyone of the preceding claims, wherein the length adjustment device (15) and the length adapted lever (14) are made from the same material, preferably including steel.

5. The linkage mechanism (1) of anyone of the preceding claims, wherein the length adjustment device (15) is configured to increase or decrease the length of the length adapted lever (14) in a range larger than +/- 0,1 mm from its nominal length, said nominal length being defined as the magnification of the length adapted lever (14)'s length thanks to the length adjustment device (15) is null.

6. The linkage mechanism (1) of anyone of claims 1 to 5, wherein the length adjustment device (15) comprises a central opening (151) laterally delimited by two lateral borders (152, 153), each lateral border extending from the length adapted lever (14) and being located at each side of the central opening (151).

7. The linkage mechanism (1) of the preceding claim, wherein each lateral border comprises a first segment (154) and a second segment (155) angularly oriented with respect to the first segment (154).

8. The linkage mechanism (1) of anyone of claims 1 to 5, wherein the length adjustment device (15) comprises folded segment made from the length extended lever, the folded segment being foldable or unfolded in order to respectively decrease or extend said length adapted lever (14).

9. The linkage mechanism (1) of the preceding claim, wherein the length adjustment device (15) has a U-shape or an OMEGA-shape.

10. Windscreen wiper device (2) for a motor vehicle, the windscreen wiper device (2) comprising a wiper arm (24) able to support at least one wiper blade (25), said wiper arm (24) being coupled to a rotating shaft (28) thanks to a coupling mechanism, said coupling mechanism comprising the linkage mechanism (1) to anyone of the preceding claims, a first end (121) of the drive lever (12) being coupled to the rotative shaft (28) of a drive mechanism.
